# EUROPÄISCHE PATENTANMELDUNG

(11) **EP 0 857 970 A2**
(43) Veröffentlichungstag der Anmeldung: **12.08.1998**
(21) Anmeldenummer: 98100608.3
(22) Anmeldetag: 15.01.1998
(51) Int. Cl.: G01N 27/84

(54) **Vorrichtung zur berühungslosen Magnetpulverprüfung der Endbereiche von Rohren**

(30) Priorität: 07.02.1997 DE 19704596
(71) Anmelder: Helling Kommanditgesellschaft für Industrieprodukte und Anlagenbau (GmbH & Co.), 22525 Hamburg (DE)
(72) Erfinder: Riess, Nathanael, 25436 Uetersen (DE)
(74) Vertreter: Meyer, Ludgerus A., Dipl.-Ing.

(57) **Zusammenfassung**

Die Erfindung betrifft eine Vorrichtung zur berührungslosen Magnetpulverprüfung der inneren Endbereiche von ferromagnetischen hohlzylindrischen Werkstücken, insbesondere Rohren, mittels einer gestreckten Luftspule mit einem Stromleiter (1) mit senkrecht zueinander verlaufenden Längsabschnitten (8 - 15) und Querabschnitten, wobei der Stromleiter in der Mantelfläche der Spule liegt und ein rechteckiges spiralförmiges Muster bildet, dessen Längsabschnitte (8 - 15) parallel zur Werkstückachse verlaufen. Erfindungsgemäß besteht die Spule aus einem massiven Rohrabschnitt, bei dem der Stromleiter (1) durch einen die Längs- und Querabschnitte der Spule bestimmenden Radialschnitt der Rohrabschnittwandung gebildet ist.

## Beschreibung

Die Erfindung betrifft eine Vorrichtung zur berührungslosen Magnetpulverprüfung der inneren Endbereiche von ferromagnetischen hohlzylindrischen Werkstücken, insbesondere Rohren, nach dem Oberbegriff des Anspruchs 1.

Die zerstörungsfreie Werkstoffprüfung von ferromagnetischen Werkstücken erfolgt häufig unter Verwendung der Magnetpulverprüfung. Dabei wird das Werkstück einem magnetischen Feld ausgesetzt, wobei gleichzeitig trockenes oder in Flüssigkeit suspendiertes Magnetpulver auf das Werkstück aufgegeben wird. Fehlstellen des Werkstücks, insbesondere Quer- und Längsfehler, lassen sich anhand der resultierenden Verteilung des Magnetpulvers auf dem Werkstück optisch feststellen.

Während eine Außenprüfung von Rohren ohne weiteres im Durchlaufverfahren durchgeführt werden kann, ist es zur Prüfung der inneren Endoberflächen von Rohren erforderlich, zum Aufbau eines Magnetfeldes eine zylinderförmige Spule in das Ende des Rohres einzuschieben und nach dem Zurückfahren der Spule die Magnetpulververteilung auf der inneren Oberfläche des Rohres mit UV-Lampe oder Tageslicht zu beobachten.

Aus der EP 0 442 267 ist eine Vorrichtung zur berührungslosen Magnetpulverprüfung der inneren Endbereiche von ferromagnetischen hohlzylindrischen Werkstücken auf Längs- und Querfehler bekannt, die aus einer gestreckten Luftspule besteht, deren Längsleiterabschnitte parallel zur Werkstückachse ausgerichtet sind und die Quererstreckung der Spule der lichten Weite des Werkstücks angepaßt ist. Die Längsleiterabschnitte der Spule verlaufen im eingefahrenen Zustand nahe der Innenoberfläche des Werkstücks Zur Prüfung sowohl auf Längs- als auch auf Querfehler in einem Arbeitsgang ist es erforderlich, die verwendete Spule unter Relativbewegung zwischen Spule und Werkstück in das Werkstück ein- bzw. aus dem Werkstück herauszufahren und das Werkstück dabei zu rotieren.

In einer verbesserten ähnlichen Anordnung gemäß der DE 43 16 671 liegt der stromführende Leiter der Magnetisierungsanordnung in der Mantelfläche einer hohlzylindrischen Spule, die bei Abwicklung in einer Ebene ein rechteckiges spiralförmiges Muster mit mehreren parallel in jeweils einer Wicklungsrichtung liegenden Längs- bzw. Querabschnitten bildet. Der Stromleiter selbst ist insbesondere aus mehreren übereinander angeordneten massiven Kupferblechen mit unterschiedlichen Breiten ausgeführt, wobei Stützkörper vorgesehen sind, um die Gestalt der Spule, insbesondere im Betrieb, fest zu definieren.

Derartige Magnetisierungsvorrichtungen eignen sich für große Rohrdurchmesser, bei denen es möglich ist, daß die Spule eine große Zahl von Windungen trägt, wodurch ausreichende Feldstärken erzeugt werden. Bei kleineren Rohrdurchmessem, beispielsweise unter 100 mm, muß die Zahl der möglichen Windungen der Spule erheblich reduziert werden. Da die erzeugte Feldstärke von der Zahl der Windungen und dem maximal möglichen Strom in der Einrichtung abhängt, lassen sich die Windungsquerschnitte bei gleichbleibender Windungsanzahl nicht beliebig verkleinern, ohne daß die Gefahr besteht, daß der die Spule durchfließende Strom einen zu starken Temperaturanstieg bewirkt. Bei kleinen Spulendurchmessern besteht ferner das Problem der Herstellung der Windungen, die bei großern Querschnitt relativ enge Biegeradien erfordern.

Aus der DE 42 15 168 A1 ist ferner eine Vorrichtung zur magnetischen Rißprüfung von ferromagnetischen Werkstücken mittels Jochmagnetisierung bekannt, bei der die Joche in einer rohrförmigen Haltematrix festgehalten sind. Der Prüfling wird durch die Haltematrix hindurchgezogen. Eine Innenprüfung eines rohrförmigen Prüflings ist mit dieser Anordnung nicht möglich.

Der Erfindung liegt die Aufgabe zugrunde. eine Vorrichtung zur berührungslosen Magnetpulverprüfung der inneren Endbereiche von ferromagnetischen hohlzylindrischen Werkstücken anzugeben, welche auch bei relativ kleinen Rohrdurchmessern einsetzbar ist, die einfach herstellbar ist und auch unter hohen Strömen betreibbar ist.

Diese Aufgabe wird durch die in den Ansprüchen 1 und/oder 5 angegebene Erfindung gelöst. Vorteilhafte Weiterbildungen der Erfindung sind in Unteransprüchen angegeben.

Gemäß der Erfindung ist bei einer gattungsbildenden Spule vorgesehen, einen völlig neu gestalteten Spulenaufbau zu verwenden, bei dem die Spule aus einem massiven Rohrabschnitt besteht, bei dem der Stromleiter durch einen die Längs- und Querabschnitte der Spule bestimmenden Radialschnitt der Rohrabschnittwandung gebildet ist.

Durch diese Maßnahme läßt sich insbesondere das Problem der Herstellung des Spulenkörpers bei kleinen Biegeradien nahezu vollständig vermeiden. Durch den spiralförmigen Schnitt des Spulenkörpers wird aus einem Rohrabschnitt ein elektrischer Leiter gebildet, der die gewünschte Spulenform aufweist.

Es ist zwar an sich bekannt, beispielsweise in der Elektronik, Spulen in Form von gedruckten Schaltungen in einer Ebene auszubilden. Bei der Erfindung wird jedoch ein dreidimensionaler Aufbau der Spule durch Schneiden eines Rohrabschnitts gebildet.

In bevorzugter Weise können die Zwischenräume zwischen den Windungen der Spule mittels eines nicht magnetischen Materials, beispielsweise Kunststoff, ausgefüllt werden, um so wieder einen quasi homogenen Rohrabschnitt zu bilden.

Vorzugsweise werden die Enden des Stromleiters mit elektrischen Anschlüssen versehen, um den Magnetisierungsstrom zuführen zu können, wobei das innere Ende der Spule durch das Innere des Rohrabschnitts nach außen geführt ist, so daß die Stromzu- und Abführung parallel von einer Stirnseite des Spulenkörpers vorgenommen werden kann.

Der Schnitt des Spulenkörpers wird vorzugsweise so ausgeführt, daß die Querschnittsform der Längsabschnitte des Stromleiters im wesentlichen trapezförmig ausgeführt sind. Damit können maximale Querschnitte des Stromleiters genutzt werden. Aufgrund der sehr viel größeren axialen Länge des Spulenkörpers als des Durchmessers ist es damit auch ohne weiteres möglich, im Gegensatz zu einer gewickelten Anordnung, die Querabschnitte des Spulenkörpers erheblich breiter als die Längsabschnitte auszuführen, deren Zahl bei kleinem Durchmesser der Magnetisierungsanordnung auf wenige Abschnitte beschränkt ist.

Das Schneiden des Spulenkörpers kann insbesondere durch Sägen hergestellt werden, es können jedoch auch andere Bearbeitungsverfahren, z. B. Fräsen oder Laserstrahlschneiden, verwendet werden.

In einer weiteren bevorzugten Ausführungsform der Erfindung, die auch unabhängig von den vorstehenden Maßnahme ausgeführt werden kann, weist der Querschnitt des verwendeten Stromleiters eine Ausnehmung auf, um Kühlflüssigkeit durch den Stromleiter führen zu können. Die kanalförmige Ausnehmung ist im wesentlichen rechtecktförmig ausgeführt und nach außen vorzugsweise mittels eines Abdeckbandes aus Kupfer, das mit dem Stromleiter vedötet ist, verschlossen.

Es kann weiter vorgesehen sein, die Enden des Stromleiters mit einer Rohrleitung zu verbinden, die sowohl die Zufuhr der Kühlflüssigkeit, als auch die Zufuhr des Magnetisierungsstroms zuläßt.

In einer weiteren Ausführungsform ist der Spulenkörper so aufgebaut, daß die beiden äußeren Längsabschnitte der Spule, die einander zugewandt sind. einen solchen Abstand zueinander aufweisen, daß ein Spülkanal, beispielsweise als Rohr, aufgenommen werden kann, über den das suspendierte Magnetisietungspulver auf das Innere des Werkstücks aufgetragen werden kann. Der Spülkanal weist dazu insbesondere mehrere radial nach außen gerichtete kleine Auslaßöffnungen auf.

Mit der erfindungsgemäßen Spulenanordnung ist es möglich, sowohl Spulendurchmesser herzustellen, die kleiner als 50 mm sind als auch gleichzeitig bei Einsatz der erfindungsgemäßen Kühlung Stromstärken bis zu etwa 3000 A zur Erzielung hoher Magnetisierungsfeldstärken zu verwenden, ohne daß merkliche Erwärmung der Magnetisierungsordnung auftritt.

Aufgrund des einfachen Aufbaus der Spulenanordnung lassen sich auch die Herstellungskosten verringern, so daß auch eine größere Anzahl von im Durchmesser enger abgestuften Anordnungen von Magnetisietungseinrichtungen für unterschiedliche Rohrmesser herstellbar sind.

Die Erfindung wird nachstehend anhand eines Ausführungsbeispiels näher erläutert.
- Fig. 1: zeigt eine abgewickelte Ansicht der Mantelfläche der erfindungsgemäßen Spule,
- Fig. 2: zeigt eine Querschnittsansicht durch den zentralen Bereich der Spule, und
- Fig. 3: zeigt eine vergrößerte Teilansicht eines Querschnitts der Spule zur Erläuterung der Querschnitts-Ausbildung des Stromleiters.

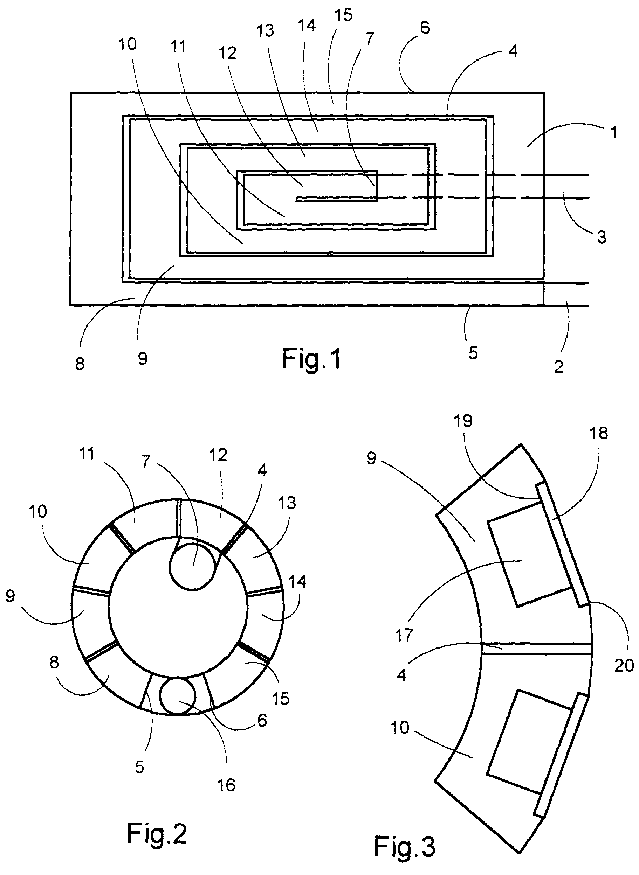

Die in Fig. 1 dargestellte Spulenausbildung zeigt - in einer Ebene liegend dargestellt - einen Stromleiter 1, der vom Anschluß 2 bis zum Anschluß 3 spiralförmig durchgehend ausgebildet ist. Die Figur zeigt zwar eine rechteckförmige Spule, jedoch ist damit die Mantelfläche der zylindrisch ausgebildeten Spule dargestellt, bei der die Außenseiten 5, 6 aneinander angrenzen.

Das innere Spulenende 7 wird durch das Innere des Spulenkörpers zum Anschluß 3 geführt, wobei Anschluß 3 und Anschluß 2 parallel an einer Stirnseite des Spulenkörpers liegen und an eine Stromversorgung angeschlossen sind.

Der Stromleiter 1 weist Längsabschnitte 8 - 15 und die Längsabschnitte verbindene Querabschnitte auf. Die Längsabschnitte verlaufen axial zum Spulenkörper und zum zu prüfenden Rohrende, während die Querabschnitte in Umfangsrichtung der Spulenanordnung verlaufen. Die gesamte Spule ist in einer Mantelfläche aufgebaut, so daß sich bei gedachter Abwicklung der Spule ein ebener rechteckförmiger Spulenkörper ergibt.

Zur Herstellung eines derartigen Spulenkörpers wird ein massiver Rohrabschnitt, insbesondere aus Kupfer, verwendet, der mittels einer Säge in die gewünschte Spulenform geschnitten wird. Die Säge stellt einen Spalt 4 her, der der Isolierung der einzelnen Windungen der Spule dient. Die Herstellung erfolgt insbesondere dadurch, daß der massive Rohrabschnitt in eine Vorrichtung eingespannt wird, in der er mittels einer Säge radial in einzelne Längsabschnitte und zusätzlich bei Drehung um seine Achse in einzelne Querabschnitte gesägt wird, wobei sich ein durchlaufender Stromleiter 1 ergibt, bei dem die einzelnen Windungen durch den Spalt 4 voneinander getrennt sind.

Fig. 2 zeigt den Spulenkörper in Querschnittsansicht, geschnitten etwa in der Mitte der Spulenanordnung. Es sind die einzelnen Längsabschnitte 8 - 15 dargestellt, die durch den Spalt 4 voneinander getrennt sind. Die gegeneinander gerichteten Längsabschnitte 8 und 15, deren Außenseiten 5, 6 gegeneinander gerichtet sind, sind auf Abstand gehalten, so daß in den Zwischenraum ein Spülrohr 16 einsetzbar ist, das äußere in Längsrichtung der Spulenanordnung verteilt angeordnetete Auslässe aufweist, so daß über das Spülrohr Spülflüssigkeit zur Einbringung von Magnetpulver auf die inneren Endbereiche des zu prüfenden Rohres möglich ist. Der Längsabschnitt 11, der am Spulenende 7 endet, und der Längsabschnitt 8 ist jeweils mit einem Zufuhrrohr verbunden, um der Spule Kühlflüssigkeit und Strom zuführen zu können.

Fig. 3 zeigt eine Detailansicht zweier Längsabschnitte 9, 10 der Spule. Der Stromleiter enthält einen Kanal 17, um Kühlflüssigkeit durch den Stromleiter führen zu können. Dieser ist im wesentlichen rechteckförmig ausgebildet und über eine Stufe 19 mit einem Abdeckblech 18 aus Kupfer verschlossen, das am Rand 20 mit dem Stromleiter verlötet ist. Eine Metallabdeckung wird bevorzugt. um den Gesamtquerschnitt der stromführenden Bereiche des Stromleiters nicht unnötig einzuschränken.

In einem ausgeführten Beispiel betrug der Außendurchmesser der Spule 40 mm, bei 10 mm Wandstärke. Es wurde ein Zufuhrrohr für Kühlflüssigkeit und Stromzufuhr mit einem Außendurchmesser von 10 mm und einem Innendurchmesser von 5 mm verwendet. Die trapzeförmig gestalteten Längsabschnitte des Stromleiters enthielten einen Kanal mit der Seitenlänge 4 x 5 mm, wobei die Außenseite stufenförmig abgesetzt war, um ein Abdeckband der Größe 2 x 8 mm aufzunehmen. Die Spaltbreite zwischen den einzelnen Windungen betrug 1,5 mm. Während der Außenumfang eines Längsabschnitts des Stromleiters 13,1 mm betrug, wurden die Querabschnitte mit einer Breite von 27 mm ausgeführt.

Bei insgesamt vier Windungen und einem verwendeten Flüssigkeitsdurchfluß von 6 l / min. wurde nach 30 sek. Stromfluß bei 1500 A Wechselstrom lediglich eine Temperaturerhöhung von 9° auf 12° und bei 2500 A Wechselstrom von 9° auf 17° festgestellt, jeweils gemessen an der Spulenoberfläche, wobei als Kühlflüssigkeit Wasser verwendet wurde.

## Patentansprüche

1. Vorrichtung zur berührungslosen Magnetpulverprüfung der inneren Endbereiche von ferromagnetischen hohlzylindrischen Werkstücken, insbesondere Rohren, mittels einer gestreckten Luftspule mit einem Stromleiter (1) mit senkrecht zueinander verlaufenden Längsabschnitten (8 - 15) und Querabschnitten, wobei der Stromleiter (1) in der Mantelfläche der Spule liegt und ein rechteckiges spiralförmiges Muster bildet, dessen Längsabschnitte (8 - 15) parallel zur Werkstückachse verlaufen, dadurch gekennzeichnet, daß die Spule aus einem massiven Rohrabschnitt besteht, bei dem der Stromleiter (1) durch einen die Längs- und Querabschnitte der Spule bestimmenden Radialschnitt der Rohrabschnittwandung gebildet ist.

2. Vorrichtung nach Anspruch 1, dadurch gekennzeichnet, daß die Spulenenden mit Anschlüssen (2, 3) zur Stromzufuhr ausgebildet sind, wobei die Stromzufuhr zum inneren Ende (7) der Spule durch das Innere des Rohrabschnitts geführt ist.

3. Vorrichtung nach Anspruch 1, dadurch gekennzeichnet, daß die Querschnittsform der Längsabschnitte (8 - 15) des Stromleiters (1) im wesentlichen trapezförmig ausgeführt ist.

4. Vorrichtung nach Anspruch 1, dadurch gekennzeichnet, daß der Radialschnitt durch Sägen hergestellt ist.

5. Vorrichtung zur berührungslosen Magnetpulverprüfung der inneren Endbereiche von ferromagnetischen hohlzylindrischen Werkstücken. insbesondere Rohren, mittels einer gestreckten Luftspule mit einem Stromleiter (1) mit senkrecht zueinander verlaufenden Längsabschnitten (8 - 15) und Ouerabschnitten, wobei der Stromleiter (1) in der Mantelfläche der Spule liegt und ein rechteckiges spiralförmiges Muster bildet, dessen Längsabschnitte (8 - 15) parallel zur Werkstückachse verlaufen, insbesondere nach einem der vorhergehenden Ansprüche, dadurch gekennzeichnet, daß der Stromleiter (1) der Spule einen entlang der Länge des Stromleiters (1) verlaufenden Kanal (17) aufweist, um Kühlflüssigkeit durch den Stromleiter (1) zu führen.

6. Vorrichtung nach Anspruch 5, dadurch gekennzeichnet, daß der Kanal (17) als im wesentlichen rechteckförmige äußere Ausnehmung des Stromleiters (1) ausgebildet ist, die durch ein äußeres Abdeckband (18) geschlossen ist.

7. Vorrichtung nach Anspruch 6, dadurch gekennzeichnet, daß das Abdeckband (18) als Metallstreifen ausgebildet und mit dem Stromleiter (1) verlötet ist.

8. Vorrichtung nach einem der Ansprüche 5 - 7, dadurch gekennzeichnet, daß die Enden der Spule mit stirnseitig zugeführten Rohrleitungen verbunden sind.

9. Vorrichtung nach einem oder mehreren der vorhergehenden Ansprüche, dadurch gekennzeichnet, daß zwischen den einander zugewandten äußeren Längsabschnitten (8, 15) ein Spülrohr (16) zur Zufuhr von Magnetisierungsflüssigkeit zum Werkstück vorgesehen ist.

10. Vorrichtung nach Anspruch 9, dadurch gekennzeichnet, daß das Spülrohr (16) entlang seiner Länge verteilt mehrere Auslässe aufweist.

11. Vorrichtung nach einem oder mehreren der vorhergehenden Ansprüche, dadurch gekennzeichnet, daß die offenen Schnittbereiche (4) der Spule mit einem nichtleitenden Materials ausgefüllt sind.
